# EUROPÄISCHE PATENTSCHRIFT

(11) **EP 1 661 750 B1**
(45) Veröffentlichungstag und Bekanntmachung des Hinweises auf die Patenterteilung: **17.10.2007**
(21) Anmeldenummer: 05024991.1
(22) Anmeldetag: 16.11.2005
(51) Int. Cl.: B60K 31/00, B60K 31/04

(54) **Verfahren und Vorrichtung zur Regelung der Geschwindigkeit eines Fahrzeugs**
Method and device for closed loop control of vehicle speed
Procédé et dispositif de régularisation de la vitesse d'un véhicule

(30) Priorität: 30.11.2004 DE 102004057723
(43) Veröffentlichungstag der Anmeldung: 31.05.2006
(73) Patentinhaber: Bayerische Motoren Werke Aktiengesellschaft, 80809 München (DE)
(72) Erfinder: Pfeiffer, Andreas, Dr., 83607 Holzkirchen (DE); Wanner, Peter, 85591 Vaterstetten (DE)

(56) Entgegenhaltungen:
- DE-A1- 10 242 684
- DE-A1- 19 833 838
- WINNER ET AL: "Adaptive Cruise Control System Aspects and Development Trends" SAE TRANSACTIONS, SOCIETY OF AUTOMOTIVE ENGINEERS, INC., WARRENDALE, PA, US, Bd. 105, Nr. 961010, 1996, Seiten 1412-1421, XP002124577 ISSN: 0096-736X

## Beschreibung

Die Erfindung bezieht sich auf ein Verfahren zur Regelung der Geschwindigkeit eines Fahrzeugs nach dem Oberbegriff des Patentanspruchs 1 und auf eine Vorrichtung zur Regelung der Geschwindigkeit eines Fahrzeugs nach dem Oberbegriff des Patentanspruchs 6.

Verfahren und Vorrichtungen zur Regelung der Geschwindigkeit eines Fahrzeugs sind bereits seit langem bekannt. Ein typisches Beispiel ist ein sogenanntes ACC-System (Adaptive Cruise Control). Bei einem solchen Fahrerassistenzsystem wird die Geschwindigkeit des Fahrzeugs automatisch auf eine vom Fahrer vorgebbare Wunschgeschwindigkeit geregelt. Weiter umfasst ein derartiges System Abstandssensoren, mit dem vorausfahrende Fahrzeuge ermittelt bzw. der Abstand zu vorausfahrenden Fahrzeugen bestimmt werden kann. Droht der Abstand zum vorausfahrendem Fahrzeug zu gering zu werden, wird die Geschwindigkeit des Fahrzeugs derart reduziert, dass ein sicherer Abstand zum vorausfahrenden Fahrzeug gehalten wird.

In der DE 43 38 399 A1 wird ein Fahrgeschwindigkeitsregler beschrieben, der auf der Basis der Differenz zwischen Soll- und Istgeschwindigkeit eine Sollbeschleunigung des Fahrzeugs vorgibt, welche durch Steuerung des Motors und/oder durch Betätigung der Radbremse des Fahrzeugs eingestellt wird.

Des Weiteren sind aus Fahrzeugen ohne automatisiertes Getriebe Fahrgeschwindigkeitsregler bekannt, welche bei Betätigung der Kupplung automatisch deaktiviert werden, so dass der Fahrer nach dem Wiedereinkuppeln durch entsprechende Betätigung der Bedientasten des Fahrgeschwindigkeitsreglers diesen erneut aktivieren muss. Eine derartige Lösung ist jedoch wenig zufriedenstellend.

Aus der gattungsbildenden DE 198 33 838 A1 sind ein Verfahren und eine Vorrichtung zur Regelung der Geschwindigkeit eines Fahrzeugs bekannt, bei dem bei Unterbrechung des Kraftschlusses zwischen der Antriebseinheit und den Antriebsrädern der Geschwindigkeitsregler zwar weiterhin aktiv ist, aber wirkungslos geschaltet wird. Während der Unterbrechung des Kraftschlusses wird in einem bevorzugten Ausführungsbeispiel die Drehzahl des Motors auf eine Drehzahl geregelt, die der bei Wiederherstellen des Kraftschlusses voraussichtlich eingelegten Übersetzung entspricht. Bei Wiederherstellen des Kraftschlusses wird die Regelung dann automatisch wieder wirksam geschaltet.

Aufgabe der Erfindung ist, das Verfahren bzw. die Vorrichtung zur Regelung der Geschwindigkeit eines Fahrzeugs, vorzugsweise eines Fahrzeugs mit Handschaltgetriebe, noch weiter zu verbessern.

Diese Aufgabe wird erfindungsgemäß durch ein Verfahren nach Patentanspruch 1 und eine Vorrichtung nach Patentanspruch 6 gelöst.

Vorteilhafte Weiterbildungen sind die Gegenstände der abhängigen Ansprüche.

Das erfindungsgemäße Verfahren zur Regelung der Geschwindigkeit eines Fahrzeugs, wobei die Fahrzeuggeschwindigkeit im Rahmen einer Regelung eines aktuell ermittelten Istwertes auf einen vorgegebenen Sollwert geregelt wird und wobei bei Unterbrechung des Kraftschlusses zwischen der Antriebseinheit des Fahrzeugs und den Antriebsrädern die Regelung für die Antriebseinheit verändert wird, zeichnet sich dadurch aus, dass bei einer Unterbrechung des Kraftschlusses die Fahrzeuggeschwindigkeit zumindest teilweise im Rahmen einer Regelung eines festen bzw. statischen Istwertes eingestellt wird, wobei der feste bzw. statische Istwert dem vor der Kraftschlussunterbrechung zuletzt erfassten Istwert entspricht oder Null ist.

Liegt eine Kraftschlussunterbrechung, bspw. aufgrund eines Schaltvorgangs, vor, ist der Regelkreislauf zwischen der Antriebseinheit und den Antriebsrädern unterbrochen, wodurch keine herkömmliche Regelung der Antriebseinheit zum Einstellen einer Wunschgeschwindigkeit vorgenommen werden kann. Gegenüber dem bekannten Stand der Technik bietet dieses Verfahren nun den Vorteil, dass auch während der Kraftschlussunterbrechung eine Quasi-Regelung bzw. eine Steuerung auf eine vorgegebene Sollgeschwindigkeit vorgenommen werden kann. Als Eingangsgröße für die Regelung bzw. Steuerung dient der vor der Kraftschlussunterbrechung zuletzt ermittelte Istwert. Im Hinblick auf eine durch die Geschwindigkeitsregelung angesteuerte Bremseinheit kann weiterhin die herkömmliche Regelung eines aktuellen Bremsmoments auf ein vorgegebenes Soll-Bremsmoment vorgenommen werden, da in diesem Fall der Regelkreislauf auch bei einer Kraftschlussunterbrechung der Antriebseinheit und den Antriebsrädern weiterhin geschlossen ist.

Die Geschwindigkeitsregelung wird in der Regel von einem sogenannten Cruise-Control-System oder von einem sogenannten ACC-System (Adaptive Cruise Control) vorgenommen, welches zusätzlich zur Geschwindigkeitsregelung eine Abstandsregelung auf ein vorausfahrendes Fahrzeug durchführt.

Die erfindungsgemäße Regelung der Geschwindigkeit auf den vor der Kraftschlussunterbrechung zuletzt erfassten Istwert bietet den Vorteil, dass eine im Rahmen der Regelung durchgeführte Störkraftschätzung, welche in Abhängigkeit von auf das Fahrzeug wirkenden Störkräften einen Störkraftfaktor ermittelt, der in die Geschwindigkeitsregelung einfliest, auch bei der Kraftschlussunterbrechung einen korrekten Störkraftfaktor ermittelt. Als Störgröße ist beispielsweise der Fahrwiderstand, der sich aus der Reibung und/oder der Neigung der Strasse ergibt, zu nennen.

Anstelle des zuletzt erfassten Istwertes kann auch der Istwert künstlich auf Null gesetzt werden, und die Fahrzeuggeschwindigkeit im Rahmen einer Regelung der Antriebseinheit auf der Basis des auf Null gesetzten Istwertes eingestellt werden. Diese Vorgehensweise bietet den Vorteil, dass der zuletzt ermittelte Istwert nicht gespeichert werden muss.

Die Unterbrechung des Kraftschlusses zwischen der Antriebseinheit und den Antriebsrädern kann beispielsweise durch Auslesen eines Kupplungsbetätigungs-Signals oder durch Auslesen eines im Motorsteuergerät dafür vorgesehenen Signals ermittelt werden. Der aktuelle Istwert kann entweder mittels eines Sensors erfasst oder auf der Basis eines Modells ermittelt werden.

Entsprechend dem erfindungsgemäßen Verfahren zeichnet sich die erfindungsgemäße Vorrichtung zur Regelung der Geschwindigkeit eines Fahrzeugs, mit einem Regler, der die Geschwindigkeit abhängig von einem ermittelten Istwert und einem vorgegebenen Sollwert regelt, und mit einem Störkraftschätzer, der in Abhängigkeit von auf das Fahrzeug wirkenden Störkräften einen Störfaktor ermittelt, der in die Geschwindigkeitsregelung einfliest, und mit einer Antriebseinheit, die vom Regler angesteuert wird, und mit Erkennungsmitteln, die feststellen, ob der Kraftschluss zwischen Antriebseinheit und Antriebsrädern unterbrochen ist, dadurch aus, dass der Störkraftschätzer derart ausgestaltet ist, dass bei Erkennen einer Unterbrechung des Kraftschlusses, für die Geschwindigkeitsregelung zumindest teilweise ein vor der Kraftschlussunterbrechung zuletzt erfasster Istwert oder ein auf Null gesetzter Istwert benutzt wird.

Sowohl das Verfahren, wie auch die Vorrichtung eignen sich besonders für Fahrzeuge mit einem Handschaltgetriebe bzw. für Fahrzeuge mit einem halbautomatischen Getriebe, bei denen der Fahrer aktiv einen Gangwechsel vornehmen kann.

Vorteilhafterweise entspricht für die Dauer der Unterbrechung der vorgegebene Sollwert, auf den der vor der Kraftschlussunterbrechung zuletzt ermittelte Istwert geregelt wird, dem vor der Kraftschlussunterbrechung zuletzt vorgegebenen Sollwert. Eine derartige Vereinfachung der Regelung ist ohne weitere Komforteinbußen möglich, da die Unterbrechung des Kraftschlusses nur für eine geringe Zeit vorliegt.

Vorteilhafterweise entspricht der Istwert einem Ist-Drehmoment und der vorgegebene Sollwert einem vorgegebenen Soll-Drehmoment. Somit entspricht auch der statische Istwert einem statischen Ist-Drehmoment. Dadurch basiert die Geschwindigkeitsregelung während der Kraftschlussunterbrechung auf der Regelung eines vor der Kraftschlussunterbrechung zuletzt ermittelten Ist-Drehmoments. Bei dem Soll- bzw. Ist-Drehmoment kann es sich um ein Kurbelwellenmoment der Brennkraftmaschine oder um das Radmoment der Antriebsräder handeln.

Nach der Unterbrechung des Kraftschlusses kann die Geschwindigkeit wieder im Rahmen der Regelung des aktuell erfassten Istwertes auf den vorgegebenen Sollwert geregelt werden, wobei der Sollwert gemäß einer Rampe von dem vor der Unterbrechung des Kraftschlusses zuletzt vorgegebenen Sollwert bis zu dem nach der Kraftschlussunterbrechung vorgegebenen Sollwert vorgegeben wird. Die stetige Rampe entspricht einer Gerade, die eine Verbindung des zuletzt ermittelten vorgegebenen Sollwertes auf den nach der Unterbrechung zuerst ermittelten und vorgegebenen Sollwert darstellt. Dieser stetige Anstieg oder Abfall des vorgegebenen Sollwertes bietet den Vorteil, dass die Geschwindigkeitsregelung nach der Unterbrechung des Kraftschlusses komfortabel in die ursprüngliche Regelung des aktuell erfassten Istwertes auf den vorgegebenen Sollwert wiedereinsetzt. Im Gegensatz dazu kann nach der Unterbrechung des Kraftschlusses anstelle des vor der Unterbrechung zuletzt erfassten Istwertes direkt der nach der Unterbrechung des Kraftschlusses zuerst ermittelte aktuelle Istwert verwendet werden.

Im Folgenden wird die Erfindung anhand einer Zeichnung näher erläutert. Dabei zeigt die
- Fig. 1: eine vereinfachte Ausführungsform der erfindungsgemäßen Vorrichtung, anhand derer ein Ausführungsbeispiel des erfindungsgemäßen Verfahrens beschrieben wird und
- Fig. 2: den dazugehörigen zeitlichen Verlauf eines Ist-Drehmoments und eines Soll-Drehmoments.

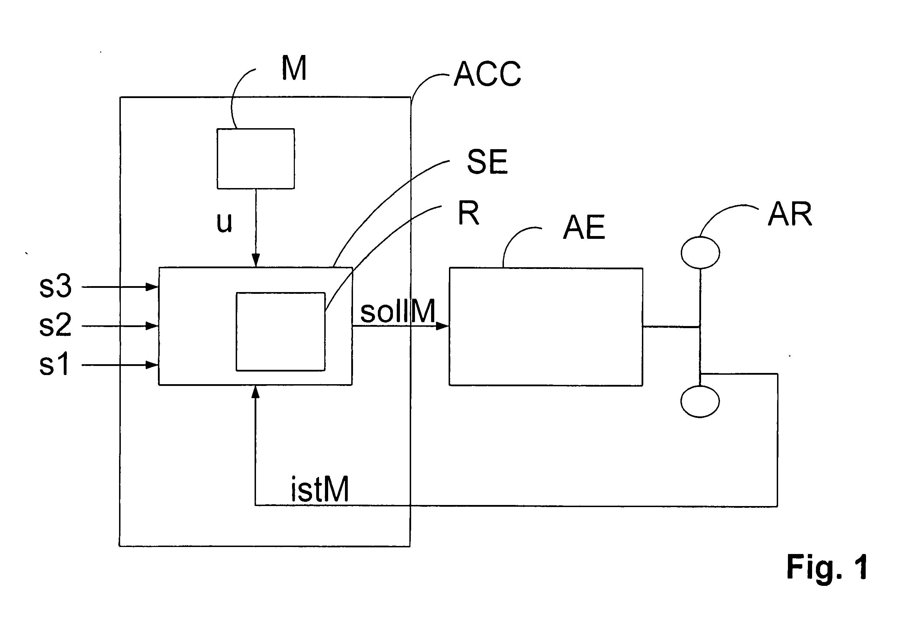

Die Fig. 1 zeigt ein zur Geschwindigkeitsregelung vorhandenes ACC-System ACC, das eine Steuereinheit SE mit einem Regler R und ein Erkennungsmittel M zum Feststellen einer Kraftschlussunterbrechung zwischen einer Antriebseinheit AE und Antriebsrädern AR umfasst. Die Steuereinheit SE des ACC-Systems ACC sendet in Abhängigkeit von der vorgegebenen Wunschgeschwindigkeit, der aktuellen Geschwindigkeit und vom aktuell ermittelten Störfaktor ein Soll-Drehmoment sollM zur Regelung der Geschwindigkeit auf die vorgegebene Wunschgeschwindigkeit an die Antriebseinheit AE. Die Antriebseinheit AE treibt entsprechend dem vorgegebenen Soll-Drehmoment sollM die Antriebsräder AR eines hier nicht weiter dargestellten Fahrzeugs an. Aufgrund der Fahrzeugverhältnisse, wie dem vorgegebenen Soll-Drehmoment solIM und der aktuellen Getriebeübersetzung, stellt sich ein aktuelles Ist-Drehmoment istM der Antriebsräder AR, also ein Radmoment, ein, das der Steuereinheit SE bzw. dem Regler R in der Steuereinheit SE zugeführt wird.

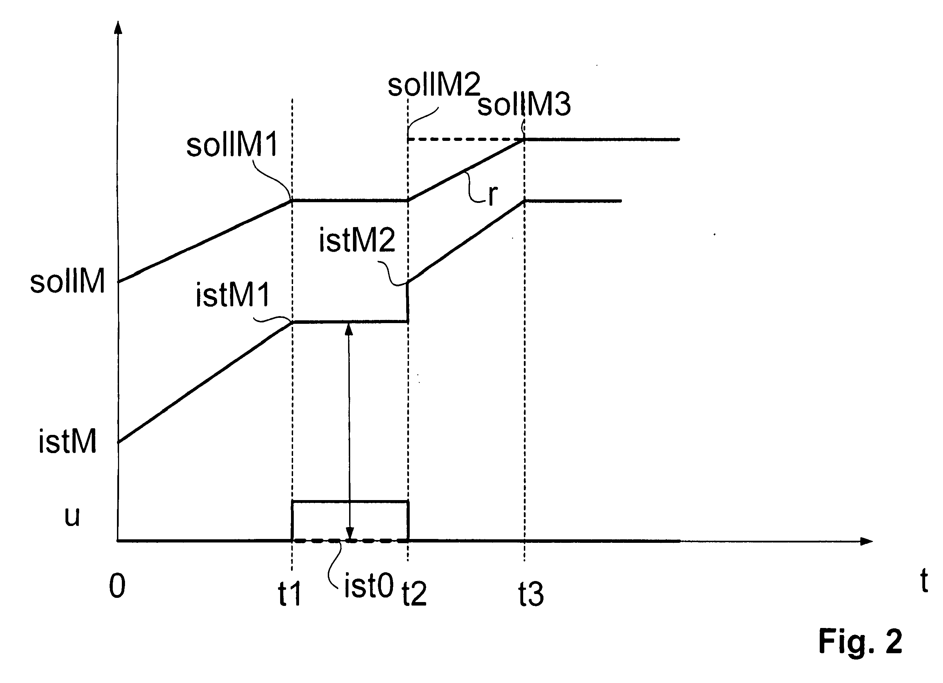

Die Steuereinheit SE erhält zusätzlich zum aktuell ermittelten Ist-Drehmoment istM weitere Eingangssignale s1, s2 und s3 und, falls das Erkennungsmittel eine Kraftschlussunterbrechung detektiert, ein Unterbrechungssignal u. Der Regler R ist derart ausgestaltet, dass er, solange keine Kraftschlussunterbrechung detektiert wird, die Fahrzeuggeschwindigkeit im Rahmen einer Regelung des aktuell ermittelten Ist-Drehmoments istM auf das vorgegebene Soll-Drehmoment sollM unter Berücksichtigung der weiteren Eingangssignale s1 bis s3 regelt. In der Fig. 2 ist diesem Regelungsabschnitt der Soll-Drehmomentenverlauf solIM und der Ist-Drehmomentenverlauf istM vom Zeitpunkt 0 bis zum Zeitpunkt t1 zugeordnet. Während dieser Zeitspanne liegt kein Unterbrechungssignal u an.

Wird durch das Erkennungsmittel M eine Unterbrechung des Kraftschlusses zwischen der Antriebseinheit AE und den Antriebsrädern AR detektiert und ein Unterbrechungssignal u vom Zeitpunkt t1 bis zum Zeitpunkt t2 (siehe Fig. 2) erzeugt, wird die Geschwindigkeit im Rahmen einer Regelung des vor der Kraftschlussunterbrechung zuletzt ermittelten Ist-Drehmoments istM1, das in der Fig. 2 dargestellt ist, geregelt, da bei der Kraftschlussunterbrechung kein aktuelles Ist-Drehmoment istM der Antriebsräder AR ermittelt werden kann. Anstelle des vor der Kraftschlussunterbrechung zuletzt ermittelten Ist-Drehmoments istM1 kann die Geschwindigkeit auch im Rahmen einer Regelung eines künstlich auf Null gesetzten Ist-Drehmoments istNull, das ebenfalls in der Fig. 2 dargestellt ist, geregelt werden. Ebenso entspricht für die Dauer der Kraftschlussunterbrechung das vorgegebene Soll-Drehmoment solIM dem vor der Kraftschlussunterbrechung zuletzt vorgegebenen Soll-Drehmoment sollM1 entsprechend der Fig. 2.

Nach der Kraftschlussunterbrechung, wenn ab dem Zeitpunkt t2 kein Unterbrechungssignal u mehr anliegt, wird die Geschwindigkeit wiederum im Rahmen einer Regelung des aktuell ermittelten Istwertes istM2 auf das vorgegebene Soll-Drehmoment sollM geregelt, wobei das Soll-Drehmoment sollM gemäß einer Rampe r von dem vor der Unterbrechung des Kraftschlusses zuletzt vorgegebenen Sollwert sollM1 bis zu dem nach der Kraftschlussunterbrechung vorgegebenen Soll-Drehmoment sollM2 vorgegeben wird. Zum Zeitpunkt t3 entspricht das vorgegebene Soll-Drehmoment sollM, auf das das Ist-Drehmoment istM geregelt wird, wieder dem tatsächlich vorgegebenen Soll-Drehmoment sollM3.

## Patentansprüche

1. Verfahren zur Regelung der Geschwindigkeit eines Fahrzeugs, wobei die Fahrzeuggeschwindigkeit im Rahmen einer Regelung eines aktuell ermittelten Istwertes auf einen vorgegebenen Sollwert eingestellt wird, und wobei die Regelung bei Unterbrechung des Kraftschlusses zwischen der Antriebseinheit des Fahrzeugs und den Antriebsrädern verändert wird, **dadurch gekennzeichnet, dass** bei einer Unterbrechung des Kraftschlusses die Fahrzeuggeschwindigkeit zumindest teilweise im Rahmen einer Regelung eines statischen Istwertes (istM) eingestellt wird, wobei der statische Istwert (istM) dem vor der Kraftschlussunterbrechung zuletzt erfassten Istwert (istM1) entspricht oder Null (ist0) ist.

2. Verfahren nach Patentanspruch 1, **dadurch gekennzeichnet, dass** für die Dauer der Unterbrechung die Fahrzeuggeschwindigkeit im Rahmen einer Regelung des Istwertes (istM1) auf einen vorgegebenen Sollwert (sollM) geregelt wird, der gleich dem vor der Kraftschlussunterbrechung zuletzt vorgegebenen Sollwert (sollM1) ist.

3. Verfahren nach einem der vorangegangenen Patentansprüche, **dadurch gekennzeichnet, dass** der Istwert einem Ist-Drehmoment (istM) entspricht

4. Verfahren nach einem der vorangegangenen Patentansprüche, **dadurch gekennzeichnet, dass** der vorgegebene Sollwert einem vorgegebenen Soll-Drehmoment (sollM) entspricht.

5. Verfahren nach einem der Patentansprüche 2 bis 4, **dadurch gekennzeichnet, dass** nach der Unterbrechung des Kraftschlusses die Geschwindigkeit wieder im Rahmen der Regelung des aktuell erfassten Istwertes (istM2) auf den vorgegebenen Sollwert (sollM) geregelt wird, wobei der Sollwert gemäß einer Rampe (r) von dem vor der Unterbrechung des Kraftschlusses zuletzt vorgegebenen Sollwert (sollM1) bis zu dem nach der Kraftschlussunterbrechung vorgegebenen Sollwert (sollM2) vorgegeben wird.

6. Vorrichtung zur Regelung der Geschwindigkeit eines Fahrzeugs, mit einem Regler, der die Geschwindigkeit abhängig von einem ermittelten Istwert und einem vorgegebenen Sollwert regelt, mit einem Störkraftschätzer zum Ermitteln eines Störkraftfaktors, der in die Regelung der Geschwindigkeit einfliest, mit einer Antriebseinheit, die vom Regler angesteuert wird, und mit Erkennungsmitteln, die feststellen, ob der Kraftschluss zwischen Antriebseinheit und Antriebsrädern unterbrochen ist, **dadurch gekennzeichnet, dass** der Störkraftschätzer derart ausgestaltet ist, dass bei Erkennen einer Unterbrechung des Kraftschlusses (u) die Geschwindigkeit zumindest teilweise abhängig von einem vor der Kraftschlussunterbrechung (u) zuletzt erfassten Istwert (istM1) oder mit einem auf Null (istNull) gesetzten Istwert eingestellt wird.

## Claims

1. A method for closed-loop control of the speed of a vehicle, the vehicle speed being adjusted to a preset desired value within a closed-loop control of a currently determined actual value, and the closed-loop control being changed between the drive unit of the vehicle and the driving wheels during an interruption in the frictional connection, **characterised in that** when there is an interruption in the frictional connection, the vehicle speed is adjusted at least in part within a closed-loop control of a static actual value (actual T), the static actual value (actual T) corresponding to the actual value (actual T1) last detected before the interruption in frictional connection, or being zero (actual 0).

2. A method according to claim 1, **characterised in that** for the duration of the interruption, the vehicle speed is controlled at a preset desired value (desired T) within a closed-loop control of the actual value (actual T1), which preset desired value is the same as the last preset desired value (desired T1) before the interruption in frictional connection.

3. A method according to either of the preceding claims, **characterised in that** the actual value corresponds to an actual torque (actual T).

4. A method according to any one of the preceding claims, **characterised in that** the preset desired value corresponds to a predetermined desired torque (desired T).

5. A method according to any one of claims 2 to 4, **characterised in that** after the interruption in the frictional connection, the speed is again controlled at the preset desired value (desired T) within the closed-loop control of the currently detected actual value (actual T2), the desired value being predetermined according to a ramp (r) from the last preset desired value (desired T1) before the interruption in frictional connection up to the preset desired value (desired T2) predetermined after the interruption in frictional connection.

6. A device for closed-loop control of the speed of a vehicle, with a controller controlling the speed as a function of a determined actual value and a preset desired value, with a disturbance force estimator for determining a disturbance force factor which enters the closed-loop control of the speed, with a drive unit activated by the controller, and detection means which ascertain whether the frictional connection between drive unit and driving wheels is interrupted, **characterised in that** the disturbance force estimator is configured such that upon detection of an interruption in the frictional connection (u), the speed is adjusted at least in part as a function of an actual value (actual T1) last detected before the interruption in frictional connection (u) or with an actual value set at zero (actual zero).

## Revendications

1. Procédé de régulation de la vitesse d'un véhicule automobile, que l'on régule dans le cadre d'une régulation d'une valeur réelle actuelle déterminée, sur une valeur de consigne prédéfinie, et en modifiant la régulation de l'unité motrice quand on interrompt la transmission de force entre l'unité motrice du véhicule et les roues motrices,
**caractérisé en ce que**
lorsqu'on interrompt la transmission de force on régule la vitesse du véhicule automobile au moins en partie dans le cadre d'une régulation d'une valeur réelle stationnaire istM, cette valeur réelle stationnaire istM correspondant à la valeur réelle istM1 saisie en dernier avant l'interruption de transmission de force, ou étant ramenée à zéro, ist0.

2. Procédé selon la revendication 1,
**caractérisé en ce que**
pendant la durée de l'interruption de transmission de force, on régule la vitesse du véhicule dans le cadre d'une régulation de la valeur réelle istM1, sur une valeur de consigne prédéfinie sollM égale à la valeur de consigne sollM1 prédéterminée en dernier avant l'interruption de transmission de force.

3. Procédé selon l'une des revendications précédentes,
**caractérisé en ce que**
la valeur réelle correspond à un couple réel istM.

4. Procédé selon l'une des revendications précédentes,
**caractérisé en ce que**
la valeur de consigne prédéfinie correspond à un couple de consigne prédéfini sollM.

5. Procédé selon l'une des revendications 2 à 4,
**caractérisé en ce qu'**
après l'interruption de transmission de force, la vitesse est de nouveau régulée dans le cadre d'une régulation de la valeur réelle actuelle déterminée istM2 sur la valeur de consigne prédéfinie sollM, en prédéfinissant la valeur de consigne sollM selon une rampe r partant de la valeur de consigne sollM 1 prédéterminée en dernier avant l'interruption de transmission de force, jusqu'à la valeur de consigne sollM2 prédéfinie après l'interruption de transmission de force.

6. Dispositif pour réguler la vitesse d'un véhicule à l'aide d'un régulateur régulant une valeur réelle déterminée de la vitesse en fonction d'une valeur de consigne prédéfinie, et à l'aide d'un estimateur de force parasite calculant un coefficient de force parasite influençant la régulation de vitesse, le dispositif comprenant une unité motrice commandée par le régulateur et des moyens de reconnaissance permettant d'établir une interruption de transmission de force entre l'unité motrice et les roues motrices,
**caractérisé en ce que**
l'estimateur de force parasite est conçu de façon telle que, lorsqu'on reconnaît une interruption u de transmission de force, la vitesse est régulée au moins en partie en fonction d'une valeur réelle istM1 saisie en dernier avant l'interruption u de transmission de force, ou une valeur réelle mise à zéro, ist0.
